# EUROPÄISCHE PATENTSCHRIFT

(11) **EP 1 105 705 B1**
(45) Veröffentlichungstag und Bekanntmachung des Hinweises auf die Patenterteilung: **13.10.2004**
(21) Anmeldenummer: 99944413.6
(22) Anmeldetag: 17.08.1999
(51) Int. Cl.: G01L 1/20, B60N 2/00

(54) **FLÄCHENELEKTRODE FÜR KAPAZITIVE ERKENNUNGSSYSTEME**
FLAT ELECTRODE FOR CAPACITIVE RECOGNITION SYSTEMS
ELECTRODE PLANE POUR SYSTEMES DE RECONNAISSANCE CAPACITIFS

(30) Priorität: 20.08.1998 LU 90278; 18.11.1998 LU 90321
(43) Veröffentlichungstag der Anmeldung: 13.06.2001
(73) Patentinhaber: IEE INTERNATIONAL ELECTRONICS & ENGINEERING S.A., 6468 Echternach (LU)
(72) Erfinder: HAUER, Ernst, Johann, L-6586 Steinheim (LU)
(74) Vertreter: Beissel, Jean
(86) Internationale Anmeldenummer: PCT/EP1999/006004
(87) Internationale Veröffentlichungsnummer: WO 2000/011443

(56) Entgegenhaltungen:
- WO-A-97/18450
- DE-A- 19 510 617
- DE-C- 4 237 072
- US-A- 4 715 235
- US-A- 5 060 527

## Beschreibung

Die vorliegende Erfindung betrifft eine Flächenelektrode, insbesondere zum Einbau in einen Fahrzeugsitz.

Bei der Steuerung "intelligenter" Personenrückhalte-Systeme in einem Fahrzeug sollen in zunehmendem Maße relevante Parameter eines Fahrzeuginsassen bezüglich z.B. der Auslösung des/der Airbags berücksichtigt werden, um diese(n) gezielter auslösen zu können. Die Position des Insassen bezüglich des Armaturenbretts oder des Fahrzeugsitzes wird dabei beispielsweise mittels eines kapazitiven Positionssensors ermittelt.

Das Prinzip der kapazitiven Personenerkennung in einem Fahrzeug beruht auf der Erfassung kapazitiver Veränderungen im Umfeld des jeweiligen Fahrzeugsitzes. Bei der Erfassung dieser Veränderungen mittels eines kapazitiven Sensors wird die Tatsache ausgenutzt, daß ein vorhandener Körper eine gewisse Kapazität gegenüber einer Meßelektrode aufweist, die von der Position des Körpers zu der Meßelektrode abhängig ist.

Der kapazitive Sensor umfaßt dazu eine flächige Meßelektrode, die beispielsweise in die Rückenlehne oder die Sitzfläche eines Fahrzeugsitzes eingebaut ist und die mit einer Wechselspannung beaufschlagt wird. Um kapazitive Feldveränderungen durch Personen oder Gegenstände zu vermeiden, die hinter der Erfassungsfläche, d.h. hinter dem Fahrzeugsitz, angeordnet sind, ist hinter der Meßelektrode in einem gewissen Abstand eine ebenfalls flächige Abschirmelektrode angeordnet, die mit der gleichen Wechselspannung beaufschlagt wird. Die Abschirmelektrode hat vorzugsweise eine größere Ausdehnung als die eigentliche Meßelektrode, so daß das von der Meßelektrode erzeugte Wechselfeld wirksam nach vorne hin begrenzt wird.

Eine auf den Fahrzeugsitz sitzende Person befindet sich demnach in dem kapazitiven Feld der mit Wechselspannung beaufschlagten Meßelektrode und es fließt ein Strom von der Meßelektrode über die Person zur Masse, der der Kapazität zwischen dem Körper der Person und der Meßelektrode proportional ist.

Über die Messung des abfließenden Stroms kann dann die Position einer Person bezüglich der Rückenlehne des Fahrzeugsitzes bestimmt werden.

Aufgrund des Einbaus der Meßelektrode und der Abschirmelektrode in die Rückenlehne oder die Sitzfläche des Fahrzeugsitzes ergeben sich besondere Anforderungen an das zu verwendende Material der verschiedenen Elektroden, da überdies die Funktionsanforderungen an den Sensor, d.h. die Sensorempfindlichkeit, nicht negativ beeinflußt werden dürfen.

Die Elektroden müssen sich beispielsweise gut an Verformungen des Fahrzeugsitzes durch die einsitzende Person anpassen, so daß sie von der einsitzenden Person nicht als störend wahrgenommen werden. Diese Anforderung an die Haptik kann von Elektroden aus einer dünnen Metallfolie erfüllt werden. Derartige Elektroden weisen überdies eine gute elektrische Leitfähigkeit auf, so daß auch eine ausreichende Sensorempfindlichkeit gegeben ist.

Elektroden aus Metallen und daraus hergestellten Folien weisen jedoch den Nachteil auf, daß diese den hohen Anforderungen an die Durchlässigkeit der Materialien für Luft und Feuchtigkeit nicht entsprechen können. Durch die Feuchtigkeitsabgabe der in einem Automobilsitz einsitzenden Person und die Speicherung der Feuchtigkeit in den Sitzmaterialien können einerseits kapazitive Veränderungen hervorgerufen werden, die eine Meßwertveränderung hervorrufen, andererseits führt ein Mangel an Luft- und Wasserdampfdurchlässigkeit zu einer negativen Beeinflussung des Sitzkomforts.

Aus DE 19510617 ist eine kapazitive Sensorelektrode zur Erkennung kapazitiver Veränderungen im Umfeld der Sensorelektrode bekannt, mit einer Flächenelektrode, die ein flächiges Textilmaterial aus einem metallisierten Gewebe umfasst.

Aufgabe der vorliegenden Erfindung ist es folglich, eine Flächenelektrode vorzuschlagen, die den Funktionsanforderungen an eine Sensorelektrode genügt ohne den Sitzkomfort einzuschränken.

Diese Aufgabe wird erfindungsgemäß gelöst durch eine Flächenelektrode, welche aus einem metallisierten flächigen Textilmaterial, z.B. aus einem metallisierten Vliesstoff, Gestrick, Gewebe oder Gewirk besteht. Ein Gestrick, Gewebe oder Gewirk oder ein Vliesmaterial, das durch geeignete Vliestechniken hergestellt ist, ist flexibel und weist eine ausreichende dreidimensionale Verformbarkeit auf, d.h. es kann sowohl senkrecht zu der gebildeten Fläche als auch in Längs- und in Querrichtung leicht verformt werden. Die erfindungsgemäße Flächenelektrode kann sich demgemäß allen Verformungen des Fahrzeugsitzes optimal anpassen und wird von dem in dem Sitz einsitzenden Passagier nicht wahrgenommen. Die textilen, im Griff weichen Vliesstoffe bzw. Gestricke oder Gewirke zeichnen sich darüber hinaus durch eine sehr hohe Wasserdampf- und Luftdurchlässigkeit aus. Der Einbau der erfindungsgemäßen Flächenelektrode beeinflußt den Sitzkomfort des Sitzes folglich nicht.

Das metallisierte Textilmaterial umfaßt beispielsweise Polyester oder Polyamidfasern, die durch ein geeignetes Verfahren mit einer Metallschicht beschichtet werden, so daß ein Gebilde erzeugt wird das elektrisch leitend ist. Durch ein geeignetes chemisches Verfahren kann dabei jede einzelne Faser im Textilmaterial rundum metallisiert werden. Die elektrischen Leitfähigkeiten der derart gebildeten textilen Flächengebilde liegen im Bereich von 0,001 Ω/□ bis zu 2000 Ω/□. Die Maschenfeinheit der Flächenstruktur wird durch die Erfordernisse der verwendeten elektronischen Signalverarbeitungsmethoden und Reichweiten des Systems bestimmt und liegt im Bereich von < 0,1 mm bis maximal 1 mm Maschenweite im Quadrat gemessen. Ein typischer Wert liegt im Bereich von kleiner 0,5 mm.

In einer ersten Ausgestaltung umfaßt das flächige Textilmaterial vorteilhaft ein metallisch leitend gemachtes Vlies, das eine Vielzahl von wirr in allen Richtungen gelegter Fasern aufweist. Die einzelnen Fasern sind jeweils von einer dünnen Metallschicht, z.B. aus Silber, umgeben und durch diese Metallschicht untereinander elektrisch leitend verbunden. Um bei einem derartigen Vliesstoff Redundanz zu erreichen, d.h. die niedrige elektrische Leitfähigkeit der Flächengebilde bei einem Fadenbruch zusätzlich abzusichern, ist es vorteilhaft die durch Vliesherstellungstechniken erzeugte Flächengebilde durch ein geeignetes Verfahren zusätzlich leitend zu verbinden. Diese zusätzliche Verbindung oder Verknüpfung der Fasern wird als Längskontaktierung bezeichnet. Aus diesem Grund sind bei der erfindungsgemäßen Flächenelektrode vorzugsweise mehrere beabstandete, in Produktionsrichtung des Vliesstoffs verlaufende Längskontaktierungen aus elektrisch leitenden Metallfasern vorgesehen, die die einzelnen Fasern des Vliesstoffs zusätzlich miteinander verbinden. Bei einer derartigen Flächenelektrode ist selbst bei lokaler Beschädigung der leitenden Faser(n) eine isotrope Leitfähigkeit gegeben. Bei der Längskontaktierung können darüber hinaus weitere Textilfäden eingewirkt werden um ein besser handhabbares Gestrick bzw. Gewirk zu erhalten.

In einer alternativen Ausgestaltung umfaßt das flächige Textilmaterial ein Gestrick bzw, ein Gewirk. Um bei einem derartigen Gestrick bzw. Gewirk eine isotrope d.h. richtungsunabhängige, niedrige elektrische Leitfähigkeit der Flächengebilde zu erreichen, ist es ebenfalls vorteilhaft die durch Wirk- oder Stricktechniken erzeugte Flächengebilde durch ein geeignetes Verfahren in einem Winkel senkrecht zur verwendeten Maschenbildungstechnik miteinander leitend zu verbinden.

Die Längskontaktierung kann beispielsweise auf das flächige Textilmaterial aufgenäht werden. Alternativ kann die Längskontaktierung in das flächige Textilmaterial eingewirkt werden. Diese Längskontaktierung der Strick oder Wirkfäden kann auf Nähwirkmaschinen die nach dem Malimoverfahren arbeiten durch das Einwirken von leitenden Fasern und Litzen erreicht werden. Wird beim Nähwirken der Leiterbahnen die Warenbahn in gleicher Richtung wie die Wirkrichtung der Faser unter Spannung gehalten, entsteht ein leitfähiges Flächengebilde das eine hohe dreidimensionale Dehnbarkeit hat.

Es ist anzumerken, daß durch die eingewirkten oder aufgenähten Längsfäden ein einfaches Kontaktieren der Flächenelektrode durch einfache Krimpkontakte ermöglicht wird. Alternativ kann eine Anschlußvorrichtung mittels eines elektrisch leitenden Klebers, z.B. eines isotropen oder anisotropen Leitklebers, entweder an die Längskontaktierung oder aber direkt an das metallisierte Textilmaterial geklebt werden.

In einer besonders vorteilhaften Ausgestaltung umfaßt das flächige Textilmaterial ein metallisiertes Gewirk, das aus mehreren miteinander verwirkten Fasern hergestellt ist, wobei eine oder mehrere der Fasern aus elektrisch leitendem Material sind, während die restlichen Fasern aus elektrisch nicht leitenden Material sind.

Die Fasern aus elektrisch nicht leitendem Material umfassen vorteilhaft Polyamidfasern, z.B. aus Polyamid 6.6, während die Fasern aus elektrisch leitendem Material Fasern oder Litzen aus metallischen Drähten wie z.B. Kupferfasern umfassen, die preiswert und leicht verarbeitbar sind. Das aus diesen Fasern hergestellte Textilmaterial wird anschließend durch ein geeignetes Verfahren mit einer Metallschicht z.B. aus Silber, beschichtet werden, so daß ein Gebilde erzeugt wird, das elektrisch leitend ist. Die in dem Gewirk verarbeiteten Kupferfasern erlauben vorteilhaft eine dauerhafte sauerstofffreie Kontaktierung der so gebildeten Flächenelektrode mittels Krimpkontakten. Eine solche Verbindung ist wegen des Kriechverhaltens der synthetischen Polyamidfasern an einem reinen Kunststoffgewirk nicht optimal.

In einer bevorzugten Ausgestaltung sind jeweils zwei Fasern aus elektrisch leitendem Material in einem gewissen Abstand zueinander mit Fasern aus elektrisch nichtleitendem Material verwirkt. Der Abstand zwischen den Kupferfasern ist dabei vorteilhaft derart gewählt, daß eine Kontaktierung der Flächenelektrode mittels spezieller H-förmiger Krimpen oder mittels Folienkrimpen ermöglicht wird. Durch die Verbindung mit den beiden Kupferfäden wird eine sehr sichere Kontaktierung der Elektrode ermöglicht, die hohen mechanischen Beanspruchungen standhält. Durch das Einfügen von sogenannten Leitklebern in die Krimpverbindung ist es möglich es eine sauerstofffreie Verbindung zwischen dem Krimpverbinder, den metallisierten Kunststoffasern und dem elektrisch leitenden Fasern und demnach einen gegen atmosphärische Korrosion geschützten Kontakt herzustellen.

Wenn die Kontaktierung mittels einer Kupferlitze erfolgt, soll diese durch eine Passivierungsschicht geschützt werden, um zu verhindern, daß eine metallische Versilberung dadurch zerstört wird, daß das Kupfer durch die Silberschicht migriert.

In einer vorteilhaften Ausgestaltung ist das metallisierte Textilmaterial mit einer weiteren Metallschicht überzogen, z.B. durch galvanisches Beschichten mit Kupfer. Hierdurch können einerseits die elektrischen Eigenschaften des flächigen Textilmaterials verändert werden, andererseits erhöht sich hierdurch die mechanische Festigkeit des Vliesstoffs. Die galvanische Beschichtung erfolgt dabei vorzugsweise nach dem Anbringen der Längskontaktierung. Durch den Einbau der Längskontaktierung vor der galvanischen Beschichtung tritt an den Kontaktstellen eine unmittelbare Verbindung der Längskontaktierungen mit der leitenden Schicht ein. Die Vliesstoffasern sind durch die nachfolgende galvanische Beschichtung mit den Metallfasern unmittelbar verbunden.

Das metallisierte Textilmaterial wird vorteilhaft mit einer Schutzschicht gegen Umwelteinflüsse überzogen, die beispielsweise eine Korrosion der Metallisierung und eine damit einhergehende Verschlechterung der elektrischen Eigenschaften der Flächenelektrode verhindert. Als derartige Schutzschicht eignet sich beispielsweise ein Lacksystem, mit dem die Flächenelektrode überzogen wird: Besonders vorteilhaft sind hierbei UV-härtende Lacke, da diese keine Lösungsmittel enthalten und demnach zu einer porenfreien Beschichtung führen.

Die für die Herstellung des Textilmaterials geeigneten Fasern müssen so ausgewählt werden, daß die Fasern keine oder nur geringe Feuchtigkeit speichern oder die Aufnahme und Adsorption von Feuchtigkeit durch Kapillarwirkung erschwert oder verhindert wird. Als geeignet haben sich Fasern mit einer geringen Dielektrizitätskonstante aus Polyolefinen, Polyethylen und Polypropylen, oder Fasern aus Polyethylenterephthalat - (PES) Polyesterfasern - erwiesen, die keine oder nur eine geringe Wasseraufnahme haben und dadurch ihre Dielektrizitätskonstante nicht oder nur gering im Bereich der in einem Fahrzeugsitz vorkommenden Feuchtigkeitsverhältnisse verändern. Fasern oder Materialien aus Polyester können durch eine geeignete Behandlung, z.B. durch Applikation von Fluorverbindungen wasserabweisende Eigenschaften erhalten. Bei auf Polyolephinen basierenden Fasern, ist diese Behandlung nicht erforderlich wenn auf Faserpreparationen, wie z.B. Avivagen, verzichtet wird oder Faser-preparationen Anwendung finden die die hydrophoben Eigenschaften der Faseroberfläche nicht verändern.

Es ist anzumerken, daß sich die oben beschriebene Flächenelektrode besonders gut zum Einbau in einen Fahrzeugsitz eignet, bei dem hohe Anforderungen an die Haptik und die thermophysiologischen Eigenschaften gestellt werden. Sie sind kostengünstig herzustellen, da das Elektrodenmaterial mittels konventioneller Maschinen in großen Bahnen hergestellt werden kann und die Elektroden anschließend in der gewünschten Form ausgestanzt werden können.

Die vorgeschlagene Elektrode eignet sich demnach sehr gut für die Verwendung, z.B. als Meß- oder als Abschirmelektrode in einem kapazitiven Personenerkennungssystem in einem Fahrzeug.

Im folgenden wird nun eine mögliche Ausgestaltung der Erfindung anhand der beiliegenden Figuren beschrieben. Es zeigen:
- Fig.1:: Einen schematischen Aufbau einer Sensorelektrode eines kapazitiven Personendetektors in einem Fahrzeugsitz;
- Fig.2:: einen Ausschnitt aus einer ersten Ausgestaltung eines textilen Flächengebildes einer solchen Elektrode,
- Fig.3:: einen Ausschnitt aus einer zweiten Ausgestaltung eines textilen Flächengebildes einer solchen Elektrode,
- Fig.4:: einen Ausschnitt aus einer Ausgestaltung als Gewirk aus elektrisch leitenden und elektrisch nichtleitenden Fasern.

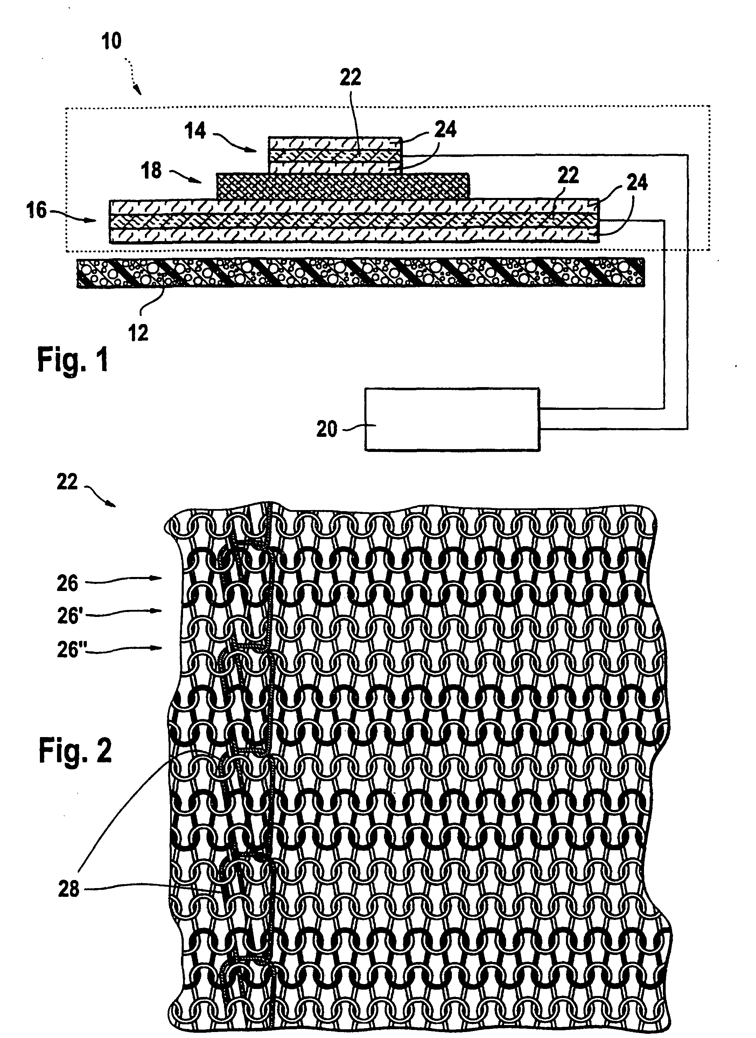

In Fig.1 ist schematisch der Aufbau einer Sensorelektrode 10 eines kapazitiven Personendetektionssystems dargestellt, die oberhalb des Sitzschaums 12 in einem Fahrzeugsitz montiert ist.

Die Sensorelektrode 10 umfaßt die eigentliche Meßelektrode 14 und eine Abschirmelektrode 16, die in einem gewissen Abstand zu der Meßelektrode 14 angeordnet ist. Die Meßelektrode 14 und die Abschirmelektrode 16 sind dazu beispielsweise durch ein Abstandsvlies oder -gewirke 18 voneinander getrennt. Ein derartiges Abstandsvlies bzw. Abstandsgewirke 18 zeichnet sich durch eine hohe Flexibilität und eine gute Wasser- und Luftdurchlässigkeit aus.

Die beiden Elektroden 14 und 16 sind an eine Meßeinrichtung 20 zur kapazitiven Messung angeschlossen, die beide Elektroden mit einer Wechselspannung beaufschlagt und die den von der Meßelektrode 14 abfließenden Strom mißt. Die Abschirmelektrode 16 schirmt dabei das von der Meßelektrode 14 erzeugte kapazitive Feld nach hinten hin ab, so daß Gegenstände oder Personen, die hinter bzw. unter dem Sitz angeordnet sind, das Meßergebnis nicht beeinflussen.

In der dargestellten Ausgestaltung ist sowohl die Meßelektrode 14 als auch die Abschirmelektrode 16 als Sandwich-Material ausgestaltet. Jede der Elektroden umfaßt ein flächiges Textilmaterial 22 aus einem metallisierten Vliesstoff, Gestrick oder Gewirk, das jeweils zwischen zwei textilen Faserlagen 24 aus einem Faservlies, einem Vliesstoff oder einem gewirkten dreidimensionalen Material eingebettet ist. Die Faserlagen bilden dabei Trägerschichten, die die Handhabung des Elektrodenmaterials verbessern. Die Herstellung des Sandwichs kann dabei Nähwirken, Einnadeln, Ultraschallschweißen, die Naßverfestigung - nach dem Hydrolace Verfahren - oder durch das Einsiegein zwischen mit thermisch aktivierbaren Bindern versehenen Faserlagen erfolgen.

Eine erste gestaltung des textilen Flächengebildes 22 umfaßt ein Gewirk oder Gestrick aus geeigneten synthetischen Fasern, das anschließend metallisiert wird. Eine gestrickte Ausgestaltung ist in Fig.2 dargestellt. Ein Gestrick oder Gewirk besteht aus einzelnen aneinandergereihten Maschenreihen 26, 26', 26", ..., die sich quer zur Herstellungsrichtung des Materials erstrecken. Durch die Metallisierung des Gewirkes bzw. Gestricks werden die einzelnen Fasern mit einem Metall, z.B. Silber, beschichtet und an den Kontaktpunkten zwischen den einzelnen Maschenreihen elektrische Kontaktierungen ausgebildet. Hierdurch erhält man ein Textilgebilde, das über die gesamte Fläche eine hohe elektrische Leitfähigkeit aufweist.

Um die elektrische Leitfähigkeit in Längsrichtung zu verbessern und so zu einer isotropen d.h. richtungsunabhängigen, niedrigen elektrischen Leitfähigkeit der Flächengebilde 22 zu gelangen, ist es vorteilhaft, die ineinandergreifenden Maschenreihen 26, 26', 26", ... durch ein geeignetes Verfahren in einem Winkel senkrecht zur verwendeten Maschenbildungstechnik zusätzlich miteinander leitend zu verbinden. Aus diesem Grund weist das flächige Textilmaterial in Querrichtung beabstandete Längskontaktierungen auf. Die Längskontaktierung umfaßt beispielsweise eine Litze 28 aus Metallfasern, die in das flächige Textilmaterial eingewirkt wird. Diese Längskontaktierung der Strick oder Wirkfäden kann auf Nähwirkmaschinen die nach dem Malimoverfahren arbeiten durch das Einwirken von leitenden Fasern und Litzen erreicht werden.

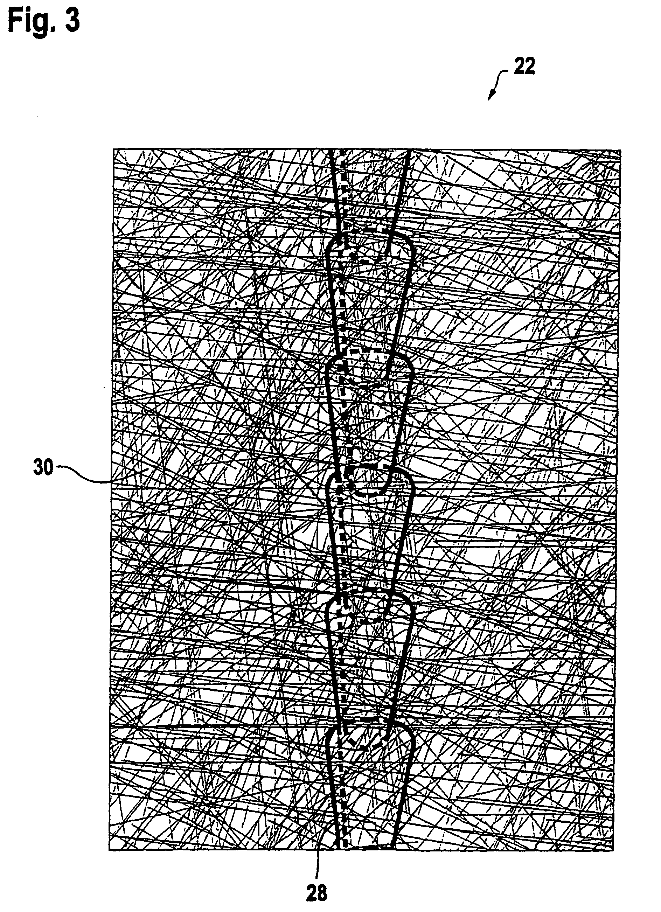

Eine zweite Ausgestaltung eines textilen Flächenmaterials 22 ist in Fig. 3 dargestellt. Es handelt sich hierbei um eine Vliesmaterial mit wirr in allen Richtungen ausgerichteten Fasern z.B. aus Polyamid, Polyester oder Polyethylen. Das mittels geeigneter Vliesherstellungsmethoden hergestellte Textilmaterial wird anschließend durch ein chemisches Verfahren metallisiert, wobei an den Kontaktpunkten zwischen den einzelnen Fasern 30 elektrisch leitende Übergänge entstehen. Hierdurch entsteht ein elektrisch leitendes textiles Gebilde, das eine gute elektrische Leitfähigkeit aufweist.

Um bei einem derartigen Vliesstoff Redundanz zu erreichen, d.h. die niedrige elektrische Leitfähigkeit der Flächengebilde bei einem Fadenbruch zusätzlich abzusichern, ist es vorteilhaft die durch Vliesherstellungstechniken erzeugte Flächengebilde durch ein geeignetes Verfahren zusätzlich leitend zu verbinden. Aus diesem Grund weist auch das Vliesmaterial vorzugsweise mehrere beabstandete, in Produktionsrichtung des Vliesstoffs verlaufende Längskontaktierungen 28 aus elektrisch leitenden Metallfasern auf, die die einzelnen Fasern 30 des Vliesstoffs zusätzlich miteinander verbinden. Bei einer derartigen Flächenelektrode ist selbst bei lokaler Beschädigung der leitenden Faser(n) eine isotrope Leitfähigkeit gegeben.

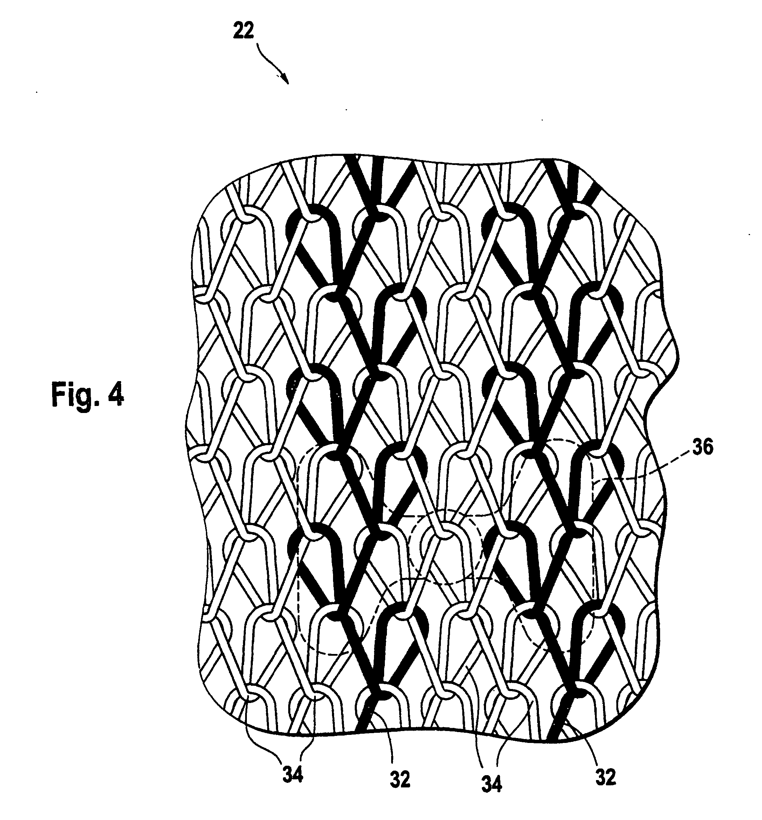

Figur 4 zeigt eine Ausgestaltung einer Flächenelektrode mit einem Gewirk aus elektrisch leitenden 32 und elektrisch nichtleitenden 34 Fasern einer Flächenelektrode. In der vorliegenden Ausgestaltung sind jeweils zwei elektrisch leitende Fasern 32 in einem beliebig wählbaren Abstand von z.B. zwei nichtleitenden Fasern 34 angeordnet, um so eine vorteilhafte Kontaktierung der Flächenelektrode mittels H-Crimp 36 zu ermöglichen.

## Patentansprüche

1. Kapazitive Sensorelektrode (10) zur Erkennung kapazitiver Veränderungen im Umfeld der Sensorelektrode, mit mindestens einer Flächenelektrode (14, 16), wobei die Flächenelektrode ein flächiges Textilmaterial (22) aus einem metallisierten Vliesstoff, Gewirk, Gewebe oder Gestrick umfasst, **dadurch gekennzeichnet, dass** das flächige Textilmaterial in bestimmten Abständen durch eine Längskontaktierung (28) aus elektrisch leitenden Fasern zusätzlich elektrisch leitend kontaktiert ist.

2. Kapazitive Sensorelektrode (10) nach Anspruch 1, wobei die Längskontaktierung (28) einen Draht oder eine Litze aus Metallfasern umfaßt.

3. Kapazitive Sensorelektrode (10) nach einem der Ansprüche 1 oder 2, wobei die Längskontaktierung (28) in das flächige Textilmaterial eingewirkt ist.

4. Kapazitive Sensorelektrode (10) nach einem der Ansprüche 1 oder 2, wobei die Längskontaktierung (28) auf das flächige Textilmaterial aufgenäht ist.

5. Kapazitive Sensorelektrode (10) nach einem der Ansprüche 1 bis 4, wobei das flächige Textilmaterial der Flächenelektrode ein metallisiertes Gewirk umfasst, **dadurch gekennzeichnet, daß** das Gewirk aus mehreren miteinander verwirkten Fasern hergestellt ist und eine oder mehrere der Fasern (32) aus elektrisch leitendem Material sind während die restlichen Fasern (34) aus elektrisch nicht leitenden Material sind.

6. Kapazitive Sensorelektrode (10) nach Anspruch 5, **dadurch gekennzeichnet, daß** jeweils zwei Fasern aus elektrisch leitendem Material in einem gewissen Abstand zueinander mit Fasern aus elektrisch nichtleitendern Material verwirkt sind.

7. Kapazitive Sensorelektrode (10) nach einem der Ansprüche 5 oder 6, **dadurch gekennzeichnet, daß** die Fasern aus elektrisch nicht leitendem Material Polyamidfasern umfassen.

8. Kapazitive Sensorelektrode (10) nach einem der Ansprüche 5 bis 7, **dadurch gekennzeichnet, daß** die Fasern aus elektrisch leitendem Material Fasern oder Litzen aus metallischen Drähten umfassen.

9. Kapazitive Sensorelektrode (10) nach Anspruch 8, **dadurch gekennzeichnet, daß** die Fasern aus elektrisch leitendem Material Kupferfasern umfassen.

10. Kapazitive Sensorelektrode (10) nach einem der Ansprüche 5 bis 9, **dadurch gekennzeichnet, daß** das Gewirk mit Silber metallisiert ist.

11. Kapazitive Sensorelektrode (10) nach einem der vorhergehenden Ansprüche, **dadurch gekennzeichnet, daß** das metallisierte Textilmaterial galvanisch mit einer weiteren Metallschicht überzogen ist

12. Kapazitive Sensorelektrode (10) nach einem der vorhergehenden Ansprüche, **dadurch gekennzeichnet, daß** das metallisierte Textilmaterial mit einer Schutzschicht aus einem Lack, vorzugsweise einem PU-Lack oder AcrylLack, überzogen ist

13. Kapazitive Sensorelektrode (10) nach einem der vorhergehenden Ansprüche, **dadurch gekennzeichnet, daß** die Kontaktierung der Flächenelektrode durch einen flächigen Crimpanschluß (36) erfolgt.

14. Kapazitive Sensorelektrode (10) nach Anspruch 7, **dadurch gekennzeichnet, daß** die Kontaktierung der Elektrode durch Einbringen eines Leitklebers gegen atmosphärische Einflüsse geschützt ist

15. Kapazitive Sensorelektrode (10) nach einem der vorhergehenden Ansprüche, **dadurch gekennzeichnet, dass** die Flächenelektrode eine Meßelektrode ist

16. Kapazitive Sensorelektrode (10) nach einem der vorhergehenden Ansprüche, **dadurch gekennzeichnet, dass** die Flächenelektrode eine Abschirmelektrode ist

17. Fahrzeugsitz mit einer kapazitiven Sensorelektrode nach einem der vorhergehenden Ansprüche.

18. Verwendung einer kapazitiven Sensorelektrode nach einem der vorhergehenden Ansprüche in einem kapazitiven Personenerkennungssystem in einem Fahrzeug.

## Claims

1. Capacitive sensor electrode (10) for detecting capacitive changes in the environment of the sensor electrode, having at least one flat electrode (14, 16), the flat electrode comprising a flat textile material (22) made of a metallized nonwoven fabric, knitted fabric or woven fabric, **characterized in that** said flat textile material is conductively contacted at specific intervals by means of a longitudinal contact (28) comprising electrically conductive fibres.

2. Capacitive sensor electrode (10) according to Claim 1, in which the longitudinal contact (28) comprises a wire or a litz wire made of metal fibres.

3. Capacitive sensor electrode (10) according to one of Claims 1 or 2, in which the longitudinal contact (28) is incorporated in the flat textile material.

4. Capacitive sensor electrode (10) according to one of Claims 1 or 2, in which the longitudinal contact (28) is sewn onto the flat textile material.

5. Capacitive sensor electrode (10) according to one of Claims 1 to 4, in which the flat textile material of the flat electrode comprises a metallized knitted fabric, **characterized in that** the knitted fabric is produced from a plurality of fibres which have been knitted together, and one or more of the fibres (32) are made of electrically conductive material, whereas the remaining fibres (34) are made of electrically nonconductive material.

6. Capacitive sensor electrode (10) according to Claim 5, **characterized in that** two respective fibres made of electrically conductive material having a certain spacing from one another are knitted with fibres made of an electrically nonconductive material.

7. Capacitive sensor electrode (10) according to one of Claims 5 or 6, **characterized in that** the fibres made of an electrically nonconductive material comprise polyamide fibres.

8. Capacitive sensor electrode (10) according to one of Claims 5 to 7, **characterized in that** the fibres made of an electrically conductive material comprise fibres or litz wires made of metallic wires.

9. Capacitive sensor electrode (10) according to Claim 8, **characterized in that** the fibres made of an electrically conductive material comprise copper fibres.

10. Capacitive sensor electrode (10) according to one of Claims 5 to 9, **characterized in that** the knitted fabric is metallized using silver.

11. Capacitive sensor electrode (10) according to one of the preceding claims, **characterized in that** the metallized textile material is coated by electroplating with a further metal layer.

12. Capacitive sensor electrode (10) according to one of the preceding claims, **characterized in that** the metallized textile material is coated with a protective layer comprising a varnish, preferably a PU varnish or acrylic varnish.

13. Capacitive sensor electrode (10) according to one of the preceding claims, **characterized in that** contact is made with the flat electrode by means of a flat crimping connection (36).

14. Capacitive sensor electrode (10) according to Claim 7, **characterized in that** the contact with the electrode is protected against atmospheric effects by introducing a conductive adhesive.

15. Capacitive sensor electrode (10) according to one of the preceding claims, **characterized in that** the flat electrode is a measuring electrode.

16. Capacitive sensor electrode (10) according to one of the preceding claims, **characterized in that** the flat electrode is a screening electrode.

17. Vehicle seat having a capacitive sensor electrode according to one of the preceding claims.

18. Use of a capacitive sensor electrode according to one of the preceding claims in a capacitive person-detection system in a vehicle.

## Revendications

1. Électrode de détection capacitive (10) pour la reconnaissance de modifications capacitives dans l'environnement de l'électrode de détection, comprenant au moins une électrode plane (14, 16), l'électrode plane comprenant une matière textile plane (22) composée d'un non-tissé, d'un tricot, d'un tissu, d'une tulle, métallisé(e), **caractérisée en ce que** la matière textile plane est additionnellement contactée, à intervalles déterminés, par un contact longitudinal (28) en fibres conductrices d'électricité, de manière à conduire électriquement.

2. Électrode de détection capacitive (10) selon la revendication 1, le contact longitudinal (28) comprenant un fil ou un cordon en fibres de métal.

3. Électrode de détection capacitive (10) selon l'une des revendications 1 ou 2, le contact longitudinal (28) étant tricoté dans la matière textile plane.

4. Électrode de détection capacitive (10) selon l'une des revendications 1 ou 2, le contact longitudinal (28) étant cousu sur la matière textile plane.

5. Électrode de détection capacitive (10) selon l'une des revendications 1 à 4, la matière textile plane de l'électrode plane comprenant un tricot métallisé, **caractérisée en ce que** le tricot est fabriqué au départ de plusieurs fibres tricotées ensemble et une ou plusieurs des fibres (32) se composent d'une matière conductrice d'électricité tandis que les fibres restantes (34) se composent d'une matière non conductrice d'électricité.

6. Électrode de détection capacitive (10) selon la revendication 5, **caractérisée en ce que** respectivement deux fibres en matière conductrice d'électricité sont tricotées, à une certaine distance l'une de l'autre, avec des fibres en matière non conductrice d'électricité.

7. Électrode de détection capacitive (10) selon l'une des revendications 5 ou 6, **caractérisée en ce que** les fibres en matière non conductrice d'électricité comprennent des fibres de polyamide.

8. Électrode de détection capacitive (10) selon l'une des revendications 5 à 7, **caractérisée en ce que** les fibres en matière conductrice d'électricité comprennent des fibres ou des cordons en fils métalliques.

9. Électrode de détection capacitive (10) selon la revendication 8, **caractérisée en ce que** les fibres en matière conductrice d'électricité comprennent des fibres de cuivre.

10. Électrode de détection capacitive (10) selon l'une des revendications 5 à 9, **caractérisée en ce que** le tricot est métallisé par de l'argent.

11. Électrode de détection capacitive (10) selon l'une des revendications précédentes, **caractérisée en ce que** la matière textile métallisée est revêtue d'une couche additionnelle de métal appliquée par galvanisation.

12. Électrode de détection capacitive (10) selon l'une des revendications précédentes, **caractérisée en ce que** la matière textile métallisée est revêtue d'une couche de protection composée d'une laque, de préférence d'une laque PU ou d'une laque acrylique.

13. Électrode de détection capacitive (10) selon l'une des revendications précédentes, **caractérisée en ce que** le contactage de l'électrode plane se fait par un raccord plan à sertir (36).

14. Électrode de détection capacitive (10) selon la revendication 7, **caractérisée en ce que** le contactage de l'électrode est protégé des influences atmosphériques par la pose d'une colle conductrice.

15. Électrode de détection capacitive (10) selon l'une des revendications précédentes, **caractérisée en ce que** l'électrode plane est une électrode de mesure.

16. Électrode de détection capacitive (10) selon l'une des revendications précédentes, **caractérisée en ce que** l'électrode plane est une électrode écran.

17. Siège de véhicule comprenant une électrode de détection capacitive selon l'une des revendications précédentes.

18. Utilisation d'une électrode de détection capacitive selon l'une des revendications précédentes dans un système capacitif de reconnaissance de personnes dans un véhicule.
